# EUROPÄISCHE PATENTSCHRIFT

(11) **EP 2 379 360 B1**
(45) Veröffentlichungstag und Bekanntmachung des Hinweises auf die Patenterteilung: **29.05.2013**
(21) Anmeldenummer: 09799252.3
(22) Anmeldetag: 12.12.2009
(51) Int. Cl.: B60K 11/08

(54) **VERSTELLBARE KÜHLERGRILLANORDNUNG**
ADJUSTABLE RADIATOR GRILL ARRANGEMENT
ENSEMBLE CALANDRE RÉGLABLE

(30) Priorität: 22.12.2008 DE 102008064513
(43) Veröffentlichungstag der Anmeldung: 26.10.2011
(73) Patentinhaber: VERITAS AG, 63571 Gelnhausen (DE)
(72) Erfinder: COEL, Isa, 60385 Frankfurt (DE); STUEBING, Patrick, 63607 Waechtersbach (DE); SCHINDLER, Thomas, 63768 Hoesbach (DE)
(74) Vertreter: Witte, Weller & Partner
(86) Internationale Anmeldenummer: PCT/EP2009/008905
(87) Internationale Veröffentlichungsnummer: WO 2010/072345

(56) Entgegenhaltungen:
- DE-A1- 19 652 397
- US-A- 3 115 223

## Beschreibung

Die vorliegende Erfindung betrifft eine verstellbare Kühlergrillanordnung für ein Kraftfahrzeug, die wenigstens einen Luftkanal aufweist, durch den hindurch ein Luftstrom zum Anströmen eines Kühlers geführt werden kann, mit einem ersten Grillelement und einem zweiten Grillelement, die relativ zueinander bewegbar sind, um den Luftkanal zu öffnen oder zu schließen, wobei das erste Grillelement eine Schließkante aufweist, die bei geöffnetem Luftkanal von einer Gegenkante entfernt angeordnet ist und bei geschlossenem Luftkanal benachbart zu der Gegenkante angeordnet ist.

Derartige Kühlergrillanordnungen sind seit langem bekannt, beispielsweise aus der US-A-1,393,917.

Im Zuge schärferer Bestimmungen bezüglich der Abgasnormen und des Klimaschutzes ist es erforderlich, bauliche Maßnahmen nicht nur an den Motoren selbst, sondern auch an der direkt anschließenden Umgebung vorzunehmen. So sind Maßnahmen zur Isolierung der Motoren vorgesehen, die die Warmlaufphase von Verbrennungskraftmaschinen erheblich reduzieren. Ferner wird an Lösungen gearbeitet, die die aerodynamischen Eigenschaften von Kraftfahrzeugen verbessern. Ein weiterer Aspekt ist die Reduzierung des Geräuschpegels, die sich durch einen geschlossenen Motorraum ergibt.

Bei Fahrzeugen kann im Bereich des Kühlergrills eine große diesbezügliche Wirkung erzielt werden. So hat sich beispielsweise gezeigt, dass ein geschlossener Kühlergriff erhebliche Verbesserungen des c_{w}-Wertes mit sich bringen kann.

In der Vergangenheit sind bereits viele derartige Lösungen vorgeschlagen worden. Bspw. offenbart das US-Patent 7,325,864 B1 einen Kühlergrill, mittels dessen der Kühler vor Steinschlag geschützt werden kann.

Es ist weiterhin bekannt, dass ein verschlossener Kühlergrill die Kühlleistung nicht verschlechtern muss. Nur in wenigen Betriebszuständen des Fahrzeugs ist es erforderlich, eine direkte Anströmung des Kühlers mit Luft vorzusehen, beispielsweise bei längeren Stauphasen oder bei Bergfahrten.

Aus der eingangs genannten US-B-1,393,917 ist eine Vorrichtung zur Durchströmungssteuerung von Kühlem bekannt. Hierzu weist der Kühlergrill verstellbare Lamellen auf, die abhängig von der Kühlwassertemperatur durch einen Hebelmechanismus geöffnet oder geschlossen werden können. Dabei ist ferner vorgesehen, eine einzelne Feder vorzusehen, die auf sämtliche Lamellen wirkt, um ein Rasseln der Lamellen zu verhindern.

Zur Verbesserung der aerodynamischen Eigenschaften schlägt die DE 32 14 588 A1 eine Luftleitklappe vor, die bei geöffnetem Kühlergrill die unter das Fahrzeug strömende Luft zum Kühler leitet. Aus der DE 39 29 023 C1 ist eine Abdeckvorrichtung zur Durchschallgeräuschdämmung eines Luftkanals in Kühlern bekannt, wobei der Kühlergrill eine Mehrzahl von Horizontalstegen aus einem steifen Duroplast aufweist, an denen biegeelastische Klappen angebracht sind, die ein flexibles Dichtprofil bilden. Die Biegeelastizität der Klappen ist so bemessen, dass diese im Fahrbetrieb unter dem Staudruck des Fahrtwindes oder unter dem Saugdruck eines Lüfters in eine druckabhängige Durchlassstellung bewegt werden können.

Aus der DE 103 07 632 A1 ist eine Vorrichtung zur Regelung des Kühlluftdurchsatzes bekannt, wobei die Lamellen bei hohem Winddruck entgegen der Wirkung einer Zwangssteuerung in einen geschlossenen Zustand übergehen.

Bei den bekannten verstellbaren Kühlergrillanordnungen ist häufig die Gefahr gegeben, dass sich bei Fahrten im Winter Schnee auf den Lamellen festsetzt und diese dadurch blockiert werden. In der EP 0 163 986 A1 wird daher vorgeschlagen, die Klappen in einer kleinen Öffnungsstellung zu halten, die ein Festfrieren nicht zulässt.

Die DE 146 52 397 A1 schlägt vor, an Lamellen elastische Streifen 74 integrierien.

Ein weiteres Problem ist die Verschmutzung der Kühlergrillanordnung bzw. eines dahinter angeordneten Kühlers durch andere Verschmutzungen, wie z.B. Insekten. Auch hierdurch kann es zu Blockaden und damit zu Funktionsstörungen der Kühlergriffanordnung kommen.

Eine Kühlergrillanordnung gemäß dem Oberbegriff des Anspruchs 1 ist ans dem Dokument DE 10 2007 030 840 A1 bekannt. Vor dem obigen Hintergrund ist es die Aufgabe der Erfindung, eine verbesserte verstellbare Kühlergrillanordnung anzugeben.

Diese Aufgabe wird durch eine Kühlergrillanordnung gemäß Anspruch 1 gelöst, wobei das erste Grillelement ein elastisch verformbares Schließelement aufweist, das die Schließkante bildet.

Durch die Verwendung eines elastisch verformbaren Schließelementes, beispielsweise aus einem elastisch verformbaren Kunststoffmaterial, kann die Störanfälligkeit gegenüber Verschmutzungen und Schneebewurf deutlich verringert werden. Zum einen kann durch die elastisch verformbare Schließkante ein Festfrieren an der Gegenkante verhindert oder doch zumindest gelindert werden. Zum anderen kann aufgrund der Bewegung der Grillelemente zueinander die elastische Wirkung des Schließelementes dazu benutzt werden, verkrustete Strukturen (Schnee oder verkrustete Insektenverschmutzungen) aufzubrechen. Schließlich ermöglicht die elastisch verformbare Schließkante, dass der Luftkanal auch dann weitgehend geschlossen werden kann, wenn an der Schließkante oder an der Gegenkante Ablagerungen vorhanden sind (die wiederum durch Verunreinigungen hervorgerufen sein können).

Das Schließelement kann dabei ein elastisch verformbarer Streifen sein, der in ein starres Grillelement eingelegt wird. Ferner kann das Grillelement selber ein elastisch verformbares Schließelement sein.

Ferner weist das Schließelement ein Schlauchelement aus einem elastisch verformbaren Material auf , das einen Hohlraum umschließt.

Hierdurch kann eine besonders große elastische Verformbarkeit eingerichtet werden, so dass die oben beschriebenen Vorteile in besonders ausgeprägter Form realisierbar sind. Ferner kann ein solches Schlauchelement kostengünstig hergestellt werden. Das Schlauchelement kann dabei an den Enden entweder geschlossene oder offene Anschlüsse aufweisen.

Das Schlauchelement wird vorzugsweise an einem starren Grillelement festgelegt.

Erfindungsgemäß ist das Schlauchelement dazu ausgelegt, sein Volumen zumindest zwischen einem Offenvolumen zum Öffnen des Luftkanals und einem Schließvolumen zum Schließen des Luftkanals zu verändern.

Bei dieser Ausführungsform kann die Relativbewegung zwischen den Grillelementen dadurch eingerichtet werden, dass das Volumen des Schlauchelementes verändert wird.

Die Volumenänderung kann entweder aktiv durch eine Pumpe oder Ähnliches eingerichtet werden. Das Volumen ist dabei vorzugsweise mit einem Fluid wie einem Gas (z.B. Luft) oder auch einer Flüssigkeit gefüllt. Alternativ kann das Volumen auch in Abhängigkeit von dem anstehenden Luftdruck geändert werden, beispielsweise dadurch, dass das Volumen durch den Fahrtwinddruck variiert wird.

Besonders bevorzugt ist es hierbei, wenn das Schlauchelement das erste Grillelement bildet und die Relativbewegung zu dem zweiten Grillelement durch die Volumenänderung des Schlauchelementes eingerichtet wird.

Dabei kann das Schlauchelement bevorzugt an dem zweiten Grillelement oder an einem Trägerelement festgelegt und dazu ausgelegt sein, eine Öffnung in dem zweiten Grillelement bzw. an dem Trägerelement zu verschließen, wenn das Schließvolumen eingerichtet ist.

Bei dieser Ausführungsform kann die Kühlergrillanordnung mit einer sehr geringen Anzahl an Bauteilen eingerichtet werden.

Alternativ hierzu kann das Schlauchelement auch an einem Trägerelement festgelegt sein, das benachbart zu dem zweiten Grillelement angeordnet ist, wobei das Schlauchelement dazu ausgelegt ist, eine Öffnung in dem zweiten Grillelement zu verschließen, wenn das Schließvolumen eingerichtet ist.

Bei dieser Ausführungsform kann der Aufbau der einzelnen für die Kühlergrillanordnung verwendeten Elemente einfach sein, so dass eine preisgünstige Konstruktion möglich ist.

Insgesamt ist es ferner vorteilhaft, wenn das Schließelement an einem der Grillelemente festgelegt und dazu ausgelegt ist, eine Öffnung in dem anderen Grillelement zu verschließen, wenn die Grillelemente relativ zueinander in eine Schließposition bewegt sind.

Ferner ist es bei der Bildung eines Grillelementes durch ein Schlauchelement bevorzugt, wenn dessen Offenvolumen oder dessen Schließvolumen dadurch eingerichtet wird, dass der Hohlraum des Schlauchelementes durch Anlegen eines Vakuums verkleinert wird.

Hierdurch kann der Raum, den das Schlauchelement in diesem Zustand einnimmt, deutlich verringert werden.

Das Vakuum wird bevorzugt für das Einrichten des Offenvolumens verwendet. Dabei kann für das Einrichten des Schließvolumens eine Grundelastizität des Schlauchelementes verwendet werden, so dass der Schließzustand ohne Beeinflussung des Hohlraumvolumens eingerichtet ist. Alternativ hierzu kann das Schließvolumen auch durch Vergrößern des Hohlraumvolumens eingerichtet werden, indem beispielsweise ein Fluid unter Druck in den Hohlraum eingeführt wird.

Um eine gezielte bzw. vorbestimmte Geometrie des Schlauchelementes bei Anlegen des Vakuums zu erhalten, kann es sinnvoll sein, die Faltstellen vorzubestimmen. Dies kann über einen zentrischen Steg erfolgen, der entweder direkt mit dem Schlauchelement gebildet (beispielsweise extrudiert) wird. Alternativ kann der zentrische Steg nachträglich in dem Schlauchelement installiert werden und aus einem relativ festen Material bestehen, wie ein thermoplastisches oder ein duroplastisches Kunststoffmaterial, ein Metallmaterial etc.

Wenn das Vakuum anliegt, kann das Schlauchelement sehr schmal ausgebildet werden.

Der Begriff des Vakuums ist vorliegend so zu verstehen, dass an das Hohlraumvolumen ein solcher Unterdruck angelegt wird, dass dieses gegenüber dem entspannten Zustand verkleinert wird.

Gemäß einer weiteren bevorzugten Ausführungsform weist die Kühlergrillanordnung eine erste Platte, die das erste Grillelement bildet, und eine zweite Platte auf, die das zweite Grillelement bildet, wobei die Platten jeweils quer zur Strömungsrichtung des Luftstromes und in Strömungsrichtung hintereinander angeordnet sind, wobei die erste Platte wenigstens eine erste Öffnung aufweist und die zweite Platte wenigstens eine zweite Öffnung aufweist, wobei der Luftstrom durch die Öffnungen hindurchführbar ist, und mit Mitteln zum Einstellen des für den Luftstrom bereitgestellten Strömungsquerschnittes.

Die erste Öffnung und die zweite Öffnung können in Strömungsrichtung versetzt zueinander sein, so dass ausgeschlossen werden kann, dass ein hinter der Kühlergrillanordnung angeordneter Kühler einem direkten Luftstrom und möglichen Teilchenbewurf direkt ausgesetzt wird.

Sofern das erste Grillelement ein elastisch verformbares Schließelement aufweist, so kann dieses an dem ersten Grillelement festgelegt sein, und zwar derart, dass es in Strömungsrichtung die zweite Öffnung der zweiten Platte verschließen kann.

Es versteht sich dabei, dass die Platten an einem gemeinsamen Rahmen gelagert sein können, der eine Schnittstelle zu der Fahrzeugkarosserie bildet. Ferner weisen die Platten vorzugsweise eine Mehrzahl von Öffnungen auf. Die Platten erstrecken sich vorzugsweise über die gesamte Fläche der Kühlergrillanordnung, wenigstens jedoch über ein Drittel der Gesamtfläche der Kühlergriffanordnung.

Die erste Platte kann dabei die vordere, dem Fahrtwind ausgesetzte oder auch die hintere, dem Kühler zugewandte Platte sein.

Von besonderem Vorzug ist es dabei, wenn die Einstellmittel dazu ausgebildet sind, wenigstens eine der Platten relativ zu der anderen zu bewegen, derart, dass wenigstens eine der ersten und der zweiten Öffnung in einer ersten Relativstellung geöffnet und in einer zweiten Relativstellung zumindest teilweise geschlossen ist.

Dabei ist es besonders bevorzugt, wenn die Einstellmittel dazu ausgebildet sind, die Platte in einer Richtung parallel zur Strömungsrichtung zu bewegen.

Ferner ist es möglich, dass die Einstellmittel dazu ausgebildet sind, die Platte in einer Richtung quer zur Strömungsrichtung zu bewegen.

Bei dieser Ausführungsform können die Platten gegeneinander verschoben werden, können jedoch auch gegeneinander verschwenkt werden.

Gemäß einer weiteren bevorzugten Ausführungsform weist das Schließelement eine Lage aus einem elastisch verformbaren Material auf, die wenigstens einen elastisch aufweitbaren Schlitz aufweist, dessen Kanten die Schließkante und die Gegenkante bilden, die, wenn sie benachbart zueinander liegen, den Luftkanal schließen.

Diese Ausführungsform lässt sich zum einen besonders kostengünstig herstellen, beispielsweise aus einer Platte bzw. Folie aus einem elastisch verformbaren Material, in das ein oder eine Vielzahl von solchen Schlitzen eingebracht ist.

Dabei ist es bevorzugt, wenn die Lage aus dem elastisch verformbaren Material an einer ersten Platte festgelegt ist, wobei die Platte im Bereich des Schlitzes eine Öffnung aufweist.

Die Öffnung der Schlitze kann beispielsweise aufgrund des Fahrtwinddruckes erfolgen.

Besonders bevorzugt ist es jedoch, wenn das zweite Grillelement Spreizmittel aufweist, die dazu ausgelegt sind, den Schlitz aufzuspreizen, um den Luftkanal zu öffnen.

Dabei können die Spreizmittel beispielsweise dadurch wirken, dass die Grillelemente relativ zueinander bewegt werden.

Von besonderem Vorzug ist es dabei, wenn die Spreizmittel ein konisch zulaufendes Spreizelement aufweisen, das dazu ausgebildet ist, in den Schlitz einzudringen, um diesen aufzuspreizen.

Das Spreizelement kann dabei in einer Schließposition so angeordnet sein, dass eine Spitze hiervon unmittelbar hinter dem Schlitz angeordnet ist, um die Lage aus dem elastisch verformbaren Material in diesem Bereich abzustützen, insbesondere gegenüber höherem Fahrtwinddruck. In der Öffnungsposition kann das Schließelement dann in den Schlitz eindringen, und zwar durch die Öffnung des ersten Grillelementes hindurch.

Um den Luftkanal einzurichten, kann dabei in dem zweiten Grillelement wenigstens eine Öffnung vorhanden sein, durch die der Luftstrom hindurchströmen kann.

Alternativ hierzu weisen die Spreizmittel wenigstens ein Hakenelement auf, das eine der Schlitzkanten umgreift und dazu ausgebildet ist, den Schlitz aufzuziehen.

Hierzu können geeignete Hakenanordnungen vorgesehen sein, die sich in einer Richtung parallel zur Erstreckung der elastisch verformbaren Lage erstrecken und in dieser Richtung verschiebbar sind, um den Schlitz (oder die Schlitze) aufzuziehen.

Generell wird mit der vorliegenden Erfindung wenigstens einer der folgenden Vorteile erzielt:

Durch die Verwendung von flexiblen bzw. elastischen Elementen kann eine Geräuschminderung bzw. -dämpfung effektiver realisiert werden. Zum anderen kann sich eine weniger störanfällige Funktionsweise einrichten lassen.

Durch die Verwendung von elastisch verformbaren Werkstoffen kann eine Blockade durch Schneebewurf oder sonstige Verunreinigungen vermieden werden. Ferner kann eine solche Blockade dadurch verhindert werden, dass eine rein translatorische Bewegung zwischen wenigen Elementen es ermöglicht, den Luftkanal zu öffnen oder zu schließen. Die elastische Verformbarkeit des Schließelementes kann dafür sorgen, dass vereiste oder vertrocknete Verschmutzungen abfallen, sobald sich das Schließelement verformt.

Im Falle der Verwendung von Schlauchelementen kann eine Verschmutzung bzw. Vereisung dadurch aktiv beseitigt werden, dass die Schlauchelemente pulsierend mit Luft oder einem sonstigen Fluid beaufschlagt werden, um die Verschmutzungen zu lösen. Alternativ oder zusätzlich hierzu kann auch ein erwärmtes Fluid verwendet werden, um z.B. Eisschichten von den Schlauchelementen zu lösten.

Eine Volumenänderung eines solchen Schlauchelementes kann durch eine Pumpe erzeugt werden. Alternativ hierzu kann die erforderliche Luftmenge aus einem Speicher entnommen werden, der über eine Pumpe oder ein bereits vorhandenes Bauteil des Fahrzeugs gespeist wird (z.B. einen Verdichter wie einen Turbolader).

Zur Regelung der Verstellung der Kühlergrillanordnung können Parameter herangezogen werden wie die Kühlwassertemperatur, der Kühlwasserdruck oder die Fahrgeschwindigkeit des Fahrzeugs. Auch eine Kombination dieser Regelgrößen kann zur Verstellung der Kühlergrillanordnung herangezogen werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch den vorderen Teil eines Kraftfahrzeuges mit einer Kühlergrillanordnung;
- Fig.2: eine schematische Schnittansicht durch eine Kühlergrillanordnung gemäß einer Ausführungsform mit geschlossenem Luftkanal, die nicht zur Erfindung gehört;
- Fig. 3: die Kühlergrillanordnung der Fig. 2 mit geöffnetem Luftkanal;
- Fig. 4: eine Kühlergrillanordnung, und die nicht zur Erfindung gehört und die gegenüber der Kühlergrillanordnung der Fig. 2 und 3 modifiziert ist, und zwar mit geöffnetem Luftkanal;
- Fig. 5: eine schematische Schnittansicht durch eine weitere Ausführungsform einer Kühlergrillanordnung gemäß einer weiteren Ausführungsform, die nicht zur Erfindung gehört;
- Fig. 6: eine schematische Schnittansicht durch eine Kühlergrillanordnung gemäß einer Ausführungsform, die nicht zur Erfindung gehöst;
- Fig. 7: eine Schnittansicht durch eine Kühlergrillanordnung gemäß einer weiteren Ausführungsform mit geöffnetem Luftkanal, die nicht zur Erfindung gehöst;
- Fig. 8: die Kühlergrillanordnung der Fig. 7 mit geschlossenem Luftkanal;
- Fig. 9: eine Schnittansicht durch eine weitere Ausführungsform einer Kühlergrillanordnung mit geöffnetem Luftkanal;
- Fig. 10: die Kühlergrillanordnung der Fig. 9 mit geschlossenem Luftkanal;
- Fig. 11: eine Querschnittsansicht durch die Kühlergrillanordnung der Fig. 9 mit Mitteln zur Volumenveränderung eines Schlauchelementes;
- Fig. 12: eine der Fig. 11 entsprechende Ansicht einer Kühlergrillanordnung mit alternativen Mitteln zur Volumenveränderung eines Schlauchelementes;
- Fig. 13: eine Längsschnittansicht durch eine weitere Ausführungsform einer erfindungsgemäßen Kühlergrillanordnung mit geschlossenem Luftkanal, die nicht zur Erfindung gehöst;
- Fig. 14: die Kühlergrillanordnung der Fig. 13 mit geöffnetem Luftkanal;
- Fig. 15: eine Querschnittsansicht durch die Kühlergrillanordnung der Fig. 13;
- Fig. 16: eine Querschnittsansicht durch die Kühlergrillanordnung der Fig. 14;
- Fig. 17: eine schematische Vorderansicht einer Kühlergrillanordnung, die der Kühlergrillanordnung der Fig. 13 bis 16 entspricht, und zwar bei geschlossenem Luftkanal;
- Fig. 18: die Kühlergrillanordnung der Fig. 17 mit geöffnetem Luftkanal;
- Fig. 19: eine Längsschnittansicht durch eine weitere Ausführungsform einer Kühlergrillanordnung, die nicht zur Erfindung gehört;
- Fig. 20: eine perspektivische Darstellung einer weiteren Ausführungsform einer Kühlergrillanordnung, die den Kühlergrillanordnungen der Fig. 6 bis 8 entspricht;
- Fig. 21: eine Längsschnittansicht durch die Kühlergrillanordnung der Fig. 20;
- Fig. 22: eine perspektivische Darstellung einer weiteren Ausführungsform einer Kühlergrillanordnung, die der Kühlergrillanordnung der Fig. 9 bis 12 entspricht, und zwar bei geöffnetem Luftkanal;
- Fig. 23: eine Längsschnittansicht der Kühlergrillanordnung der Fig. 22 bei geschlossenem Luftkanal;
- Fig. 24: eine perspektivische Darstellung einer weiteren Ausführungsform einer Kühlergrillanordnung, die der Kühlergrillanordnung der Fig. 13 bis 18 entspricht;
- Fig. 25: eine Längsschnittansicht durch die Kühlergrillanordnung der Fig. 24 bei geschlossenem Luftkanal;
- Fig. 26: eine perspektivische Ansicht der Kühlergrillanordnung der Fig. 24 bei geöffnetem Luftkanal;
- Fig. 27: eine perspektivische Ansicht einer weiteren Ausführungsform einer Kühlergrillanordnung, die der Kühlergrillanordnung der Fig. 19 entspricht und zwar bei geschlossenem Luftkanal;
- Fig. 28: eine Detailansicht der Kühlergrillanordnung der Fig. 27 bei geöffnetem Luftkanal;
- Fig. 29: eine perspektivische Darstellung einer weiteren Ausführungsform einer Kühlergrillanordnung, die nicht zur Erfindung gehört;
- Fig. 30: eine Längsschnittansicht durch die Kühlergrillanordnung der Fig. 29;
- Fig. 31: ein erstes Grillelement einer weiteren Ausführungsform einer Kühlergrillanordnung, die nicht zur Erfindung gehört;
- Fig. 32: ein zweites Grillelement der Kühlergrillanordnung der Fig. 31;
- Fig. 33: eine schematische Schnittansicht durch eine erfindungsgemäße Kühlergrillanordnung mit geöffnetem Luftkanal;
- Fig. 34: die Kühlergrillanordnung der Fig. 33 mit geschlossenem Luftkanal; und
- Fig. 35: ein alternatives Schlauchelement für eine Kühlergrillanordnung der Fig. 33 und 34.

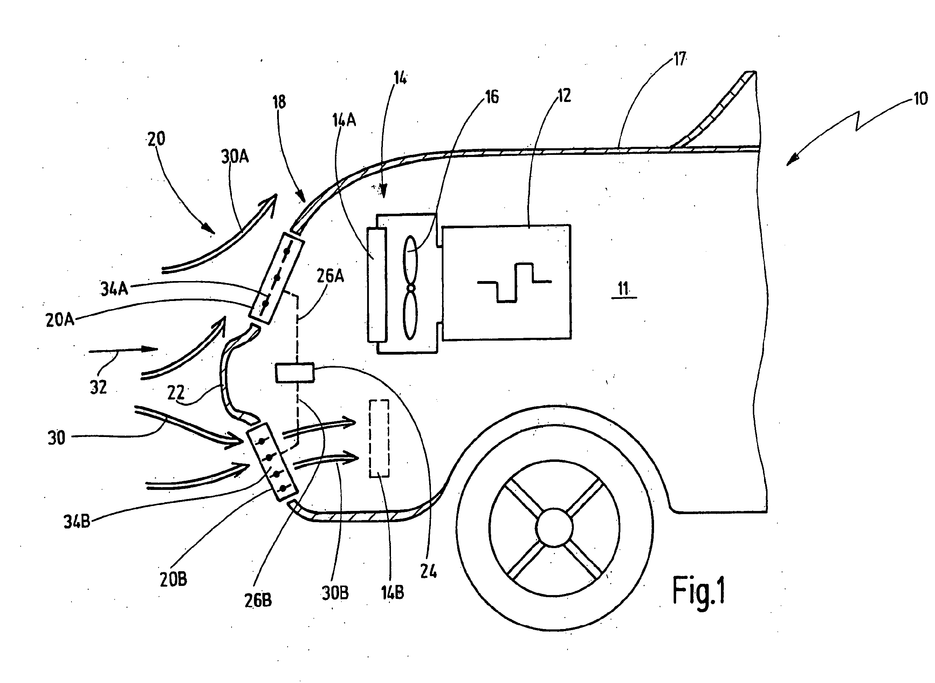

In Fig. 1 ist ein Kraftfahrzeug wie ein Personenkraftwagen in einer schematischen Längsschnittansicht gezeigt und generell mit 10 bezeichnet.

Das Kraftfahrzeug 10 weist einen Motorraum 11 auf, in dem ein Verbrennungsmotor 11 (oder ein sonstiger Antriebsmotor) angeordnet ist. Dem Verbrennungsmotor 12 ist eine Kühleranordnung 14 zugeordnet. Die Kühleranordnung 14 weist einen ersten Kühler 14A auf, der zur unmittelbaren Motorkühlung des Verbrennungsmotors 12 ausgelegt ist, und ggf. (in gestrichelten Linien gezeigt) einen zweiten Kühler 14B, der beispielsweise zur Ladeluftkühlung für einen Turbolader vorgesehen sein kann.

Dem ersten Kühler 14A ist ein Kühlerlüfter 16A zugeordnet, der dazu ausgelegt ist, einen Luftstrom durch den Kühler 14A einzurichten.

Das Kraftfahrzeug 10 weist eine Karosserie 17 mit einer Fahrzeugfront 18 auf, die mit einer Kühlergrillanordnung 20 ausgestattet ist. Die Kühlergrillanordnung 20 weist einen ersten Kühlergrill 20A auf, der dem ersten Kühler 14A zugeordnet ist, und einen zweiten Kühlergrill 20B, der dem zweiten Kühler 14B zugeordnet ist. Der erste Kühlergrill 20A ist oberhalb einer Stoßstange 22 angeordnet. Der zweite Kühlergrill 20B ist unterhalb der Stoßstange 22 angeordnet.

Der erste und der zweite Kühlergrill 20A, 20B sind jeweils verstellbar ausgebildet. Dabei ist der Kühlergrillanordnung 20 eine Steuereinheit 24 zugeordnet, die als autarke Steuereinheit ausgebildet sein kann oder Teil einer übergeordneten Steuereinheit sein kann. Die Steuereinheit 24 ist dazu ausgelegt, mittels einer Aktuatoranordnung 26 die Kühlergrillanordnung 20 zu verstellen. Genauer gesagt, beinhaltet die Aktuatoranordnung 26 einen ersten Aktuator 26A zum Verstellen des ersten Kühlergrills 20A und einen zweiten Aktuator 26B zum Verstellen des Kühlergrills 20B. Aktuatoren 26 können unabhängig voneinander angesteuert werden, oder auch gekoppelt miteinander. Die Ansteuerung der Aktuatoren 26 mittels der Steuereinheit 24 kann auf der Grundlage der unterschiedlichsten Randbedingungen erfolgen, beispielsweise auf der Grundlage der Temperatur von Kühlwasser in einem der Kühler 14A, 14B, aufgrund des Kühlwasserdruckes oder auch aufgrund der Fahrgeschwindigkeit des Fahrzeugs 10. Auch eine Kombination dieser Größen kann herangezogen werden.

Bei 30 ist ein Luftstrom gezeigt, der von vorne auf die Fahrzeugfront 18 zuströmt. Dieser Luftstrom kann entweder ein Fahrtwind sein oder auch ein Luftstrom, der durch Ansaugen von Luft mittels des Kühlerlüfters 16 eingerichtet ist. Die Strömungsrichtung des Luftstromes 30 ist bei 32 gezeigt.

Der ersten Kühlergrill 20A und der zweite Kühlergrill 20B sind derart verstellbar, dass jeweilige Luftkanäle 34A, 34B entweder geöffnet oder geschlossen werden können. In Bezug auf den Kühlergrill 20A ist gezeigt, dass der zugeordnete Luftkanal 34A (oder die Mehrzahl von darin eingerichteten Luftkanälen 34A) geschlossen ist, derart, dass der Luftstrom 30 nicht in den Motorraum 11 eindringen kann, sondern an der Fahrzeugkarosserie 17 vorbeigeführt wird.

Hingegen ist der Luftkanal 34B (oder die Luftkanäle 34B) in dem zweiten Kühlergrill 20B geöffnet, so dass ein Luftstrom 30B in den Motorraum 11 hinein eingerichtet wird, der den zugeordneten Kühler 14B beströmt und für die notwendige Kühlleistung sorgt.

Nachstehend werden verschiedene Ausführungsformen von Kühlergrillanordnungen beschrieben, die als Kühlergrill 20A und/oder als Kühlergrill 20B verwendbar sind. Ferner versteht sich, dass die Darstellung und Integration der Kühlergrillanordnung 20 in den vorderen Teil des Kraftfahrzeuges nur beispielhaft ist. Ferner muss ein Verbrennungsmotor nicht notwendigerweise im vorderen Teil des Fahrzeugs 10 untergebracht sein, sondern kann auch als Mittel- oder Heckmotor ausgebildet sein.

Die nachfolgend beschriebenen Kühlergrillanordnungen weisen in der Regel eine Mehrzahl von Öffnungen zum Einrichten von parallelen Luftströmen durch die Kühlergrillanordnung 20 hindurch auf. Nachfolgend wird zur Vereinfachung der Beschreibung jeweils in der Regel nur eine dieser Öffnungen beschrieben.

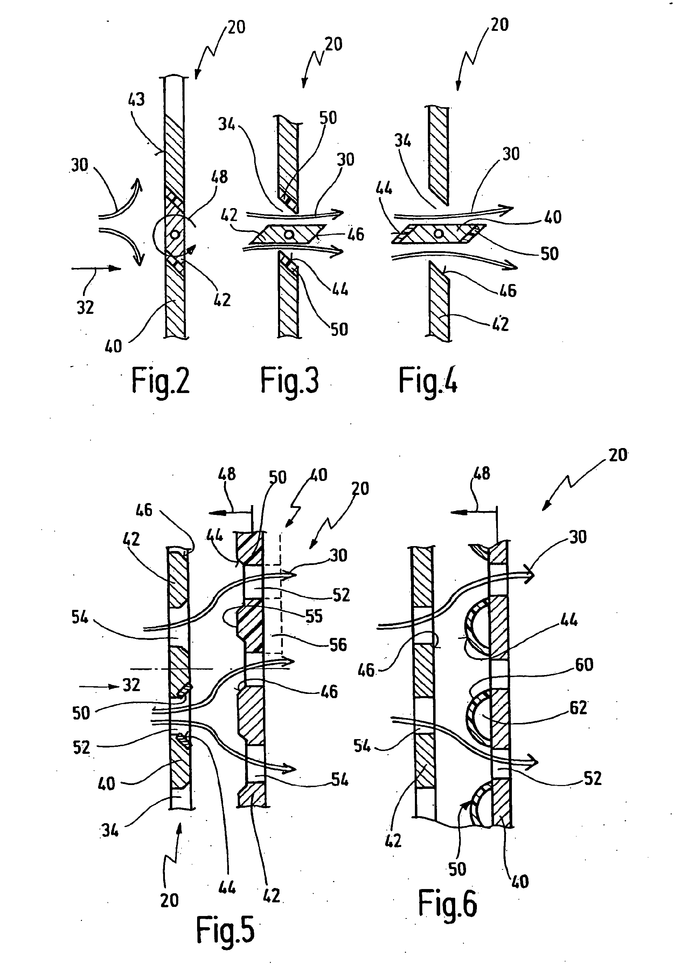

In den Fig. 2 und 3 ist eine erste Ausführungsform einer Kühlergrillanordnung 20 gezeigt, die ein erstes Grillelement 40 in Form einer Platte oder Ähnliches aufweist, die sich in eine Richtung quer zu der Strömungsrichtung 32 erstreckt. Die Kühlergrillanordnung 20 weist ferner ein zweites Grillelement 42 in Form einer drehbaren Lamelle auf, die um eine Drehachse verschwenkbar ist, die ebenfalls quer verläuft zu der Strömungsrichtung 32. In einer ersten Position (Schließposition) ist die Lamelle 42 so verschwenkt, dass sie eine in dem ersten Grillelement 40 vorgesehene Öffnung und folglich einen Luftkanal 34 durch die Kühlergrillanordnung 20 hindurch verschließt. Dabei bilden das erste Grillelement 40 und das zweite Grillelement 42 vorzugsweise eine durchgehende, im Wesentlichen bündige Oberfläche 43, so dass der Luftstrom 30 ohne große Verwirbelungen außen an der Kühlergrillanordnung 20 vorbeigeführt werden kann.

In Fig. 3 ist das zweite Grillelement 42 in einer Öffnungsposition gezeigt, bei der das zweite Grillelement 42 so in Bezug auf das erste Grillelement 40 verdreht ist, das ein Luftkanal 34 durch die Kühlergrillanordnung 20 hindurch eingerichtet werden kann.

Zum Einrichten der Schließposition weist das erste Grillelement 40 eine Schließkante 44 auf, und das zweite Grillelement 42 weist eine Gegenkante 46 auf, die in der Schließposition aneinander anliegen. Die Relativbewegung zwischen dem ersten Grillelement 40 und dem zweiten Grillelement 42 ist in Fig. 2 mit 48 bezeichnet.

Das erste Grillelement 40 weist bei der dargestellten Ausführungsform ein Schließelement 50 auf, das aus einem elastisch verformbaren Material, wie beispielsweise einem elastisch verformbaren thermoplastischen Kunststoffmaterial, einem Schaumstoffmaterial oder Ähnlichem gebildet sein kann. Das Schließelement 50 bildet dabei die Schließkante 44 des ersten Grillelements 40.

Durch die hierdurch eingerichtete elastische Verformbarkeit der Schließkante 44 kann zum einen erreicht werden, dass ein bessere Abdichtung des Luftkanals 34 in der Schließposition erfolgt. Dadurch kann eine höhere Geräuschdämpfung erreicht werden. Zum anderen kann hierdurch auch eine weniger störanfällige Funktionsweise eingerichtet werden. Insbesondere können Blockaden durch Verschmutzungen (Schneebewurf, Insekten etc.) vermieden werden, da derartige Verschmutzungen aufgrund der elastischen Verformbarkeit des Schließelementes 50 leichter gelöst werden können und so von der Schließkante 44 abfallen. Die Abdichtung zwischen dem ersten Grillelement 40 und dem zweiten Grillelement 42 kann zudem auch dann gewährleistet werden, wenn zwischen der Schließkante 44 und der Gegenkante 46 kleinere Verunreinigungen anhaften, da diese Verunreinigungen elastisch in die Oberfläche des Schließelementes 50 eingedrückt werden, wenn die Schließposition eingerichtet ist. Beim erneuten Einrichten der Öffnungsposition können sich diese Verunreinigungen relativ leicht von der Schließkante 44 lösen, wenn das Schließelement 50 sich elastisch in eine Grundform zurückverformt.

Die Schließkante 44 kann dabei vollständig durch ein elastisch verformbares Schließelement 50 gebildet sein, oder auch nur zum Teil. In den Fig. 2 und 3 ist gezeigt, dass zwischen dem ersten Grillelement 40 und dem zweiten Grillelement 42 zwei Schließkanten 44 und entsprechende Gegenkanten 46 eingerichtet werden. Es ist ferner gezeigt, dass in diesem Fall beide Schließkanten 44 durch jeweils ein elastisch verformbares Schließelement 50 gebildet werden. Alternativ hierzu ist es auch möglich, dass nur eine der Schließkanten 44 durch ein elastisch verformbares Schließelement 50 gebildet wird.

Nachstehend werden weitere Ausführungsformen von erfindungsgemäßen Kühlergrillanordnungen beschrieben, die hinsichtlich Aufbau und Funktionsweise generell der Kühlergrillanordnung 20 der Fig. 2 und 3 entsprechen. Gleiche Elemente sind daher mit gleichen Bezugsziffern versehen. Im Folgenden wird lediglich auf die Unterschiede eingegangen.

Fig. 4 zeigt eine Modifikation der Kühlergrillanordnung 20 der Fig. 2 und 3. Die Kühlergrillanordnung 20 der Fig. 4 ist so ausgebildet, dass die Lamellen an ihren Kanten jeweils ein elastisch verformbares Schließelement 50 tragen. Daher bilden die Lamellen in diesem Fall jeweils ein erstes Grillelement 40, wohingegen die quer verlaufende Platte als zweites Grillelement 42 ausgebildet ist. In entsprechender Weise sind die Gegenkanten 46 an der Platte 42 ausgebildet.

Es versteht sich, dass ein Schließelement 50 ferner sowohl zur Ausbildung der Schließkante 44 als auch zur Ausbildung der Gegenkante 46 vorgesehen sein kann. Beispielsweise können die Kühlergrillanordnungen der Fig. 2, 3 und 4 auch miteinander kombiniert werden.

In Fig. 5 sind zwei Varianten von erfindungsgemäßen Kühlergrillanordnungen 20 gezeigt. In einem oberen Teil von Fig. 5 ist eine Kühlergrillanordnung 20 gezeigt, die ein erstes Grillelement 40 aufweist, das als quer verlaufende Platte ausgebildet ist und zumindest im Bereich der Schließkante 44 aus einem elastisch verformbaren Material ausgebildet ist. Die das erste Grillelement 40 bildende Platte kann jedoch auch vollständig aus einem elastisch verformbaren Material ausgebildet sein. Die Kühlergrillanordnung 20 im oberen Teil der Fig. 5 weist ferner eine zweite Platte 42 auf, die ein zweites Grillelement 42 bildet. Die zweite Platte 42 ist etwa parallel versetzt zu der ersten Platte 40 angeordnet und erstreckt sich ebenfalls quer zur Strömungsrichtung 32. In der ersten Platte 40 sind ein oder mehrere erste Öffnungen 52 vorgesehen. In der zweiten Platte 42 sind eine oder mehrere zweite Öffnungen 54 vorgesehen. In Fig. 5 ist die Kühlergrillanordnung 20 in einem geöffneten Zustand gezeigt, bei der die Platten 40, 42 voneinander beabstandet sind und ein Luftstrom 30 durch die erste Öffnung 52 und die zweite Öffnung 54 hindurch eingerichtet ist. Zum Einrichten der Schließposition wird die erste Platte 40 in Bezug auf die zweite Platte 42 translatorisch versetzt, wie es bei 48 gezeigt ist. Die erste Öffnung 52 und die zweite Öffnung 54 sind in einer Richtung quer zur Strömungsrichtung 42 gegeneinander versetzt, so dass die zweite Öffnung 54 beim Aufeinanderzubewegen der Platten 40, 42 verschlossen wird. An der ersten Platte 40 kann dabei auf der der zweiten Platte 42 zugewandten Seite eine Erhebung 55 vorgesehen sein, die in die zweite Öffnung 54 eindringt, um diese zu verschließen.

Die Erhebung 55 kann an den Rändern konisch zulaufend ausgebildet sein, so dass sich schräge Schließkanten 44 ergeben, die in der Schließposition an entsprechend schräg ausgebildeten Gegenkanten 46 anliegen. Dabei können die Erhebungen 55 ferner so ausgebildet sein, dass sich wie in der Darstellung der Fig. 2 eine durchgehende Oberfläche 43 ergibt, obgleich dies in Fig. 5 nicht dargestellt ist.

Sofern das erste Grillelement 40 als durchgehend elastische Platte ausgebildet ist, kann diese mit einem Trägerelement 56 verbunden sein, das ebenfalls plattenartig ausgebildet und in Fig. 5 schematisch angedeutet ist.

In einem unteren Teil der Fig. 5 ist eine abgewandelte Ausführungsform einer Kühlergrillanordnung gezeigt, deren grundsätzlicher Aufbau jenem des oberen Teils der Fig. 5 entspricht.

Dabei ist jedoch eine vordere Platte als erstes Grillelement 40 ausgebildet, an dessen Kanten 44, die die erste Öffnung 52 umgeben, jeweils elastisch verformbare Schließelemente 50 eingesetzt sind. Die in Strömungsrichtung 32 hintere Platte ist dabei als zweites Grillelement 42 ausgebildet und kann als steife Platte ausgebildet sein.

In Fig. 6 ist eine weitere Ausführungsform einer erfindungsgemäßen Kühlergrillanordnung gezeigt. Die Kühlergrillanordnung 20 der Fig. 6 weist ein erstes Grillelement 40 mit einer quer verlaufenden Platte auf. An der der zweiten Platte (zweites Grillelement 42) zugewandten Seite weist das erste Grillelement 40 ein Schlauchelement 60 aus einem elastisch verformbaren Material auf, das in diesem Fall ein Schließelement 50 bildet. Das Schlauchelement 60 weist einen Hohlraum 62 auf, der mit einem Fluid (einem Gas oder einer Flüssigkeit) gefüllt ist. Das Schlauchelement kann an seinen Enden (in Fig. 6 nicht dargestellt) geöffnet oder geschlossen sein.

Eine Relativbewegung zwischen dem ersten Grillelement 40 und dem zweiten Grillelement 42 erfolgt wiederum translatorisch, wie bei 48 gezeigt. In Fig. 6 ist die Kühlergrillanordnung 20 in einem geöffneten Zustand gezeigt, bei dem ein Luftstrom 30 durch die erste Öffnung 52 und die zweite Öffnung 54 hindurch eingerichtet ist. Zum Einrichten der Schließbewegung durch die Relativbewegung 48 kommt ein vorstehender Abschnitt des Schlauchelementes 60 in Anlage an eine hintere Kante der zweiten Öffnung 54. Dabei bildet in der Schließposition ein vorderer Abschnitt des Schlauchelementes 60 eine Schließkante 44, die für eine elastisch nachgiebige Anlage an der Gegenkante 46 des zweiten Grillelementes 42 eingerichtet ist.

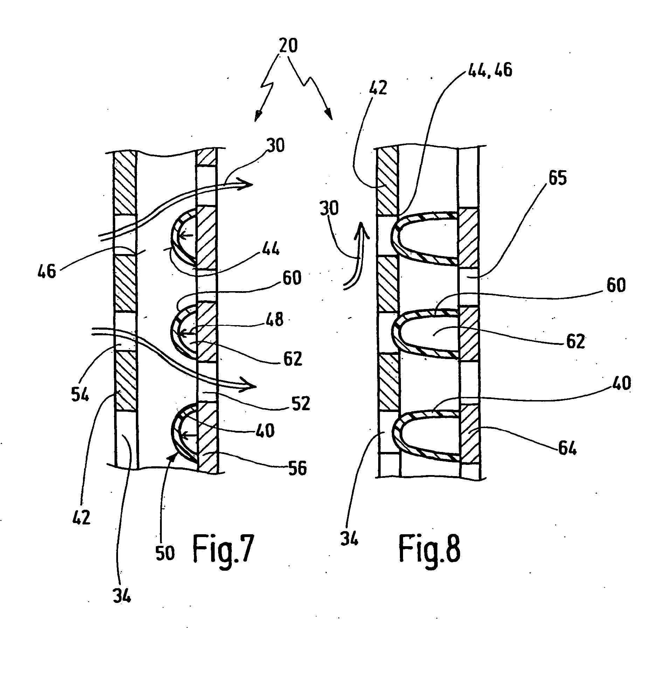

In den Fig. 7 und 8 ist eine weitere alternative Ausführungsform einer Kühlergrillanordnung 20 gezeigt. Deren Aufbau entspricht generell jenem der Kühlergrillanordnung der Fig. 6.

Dabei ist das Schlauchelement 60 so ausgebildet, dass das Volumen des Hohlraumes 62 verändert werden kann, und zwar parallel zur Strömungsrichtung 32. Das Schlauchelement 60 bildet dabei ein erstes Grillelement 40, das an einer gehäusefesten Platte festgelegt ist, die als Trägerelement 56 für das erste Grillelement 40 ausgebildet ist.

In Fig. 7 ist die Kühlergrillanordnung in einer geöffneten Position gezeigt, wobei ein Luftstrom 30 durch die erste Öffnung 52 und die zweite Öffnung 54 eingerichtet ist.

In Fig. 8 ist die Kühlergrillanordnung 20 in einer Schließposition gezeigt. Dabei ist das Volumen des Hohlraumes 62 vergrößert, derart, dass sich das Schlauchelement 60 in Richtung hin zu dem zweiten Grillelement 42 ausgedehnt hat. Die entsprechende Relativbewegung 48 ist in Fig. 7 angedeutet. In der Schließposition liegt das Schlauchelement 60 wiederum an einer Gegenkante 46 des zweiten Grillelementes 42 an, so dass dessen zweite Öffnung 54 verschlossen wird.

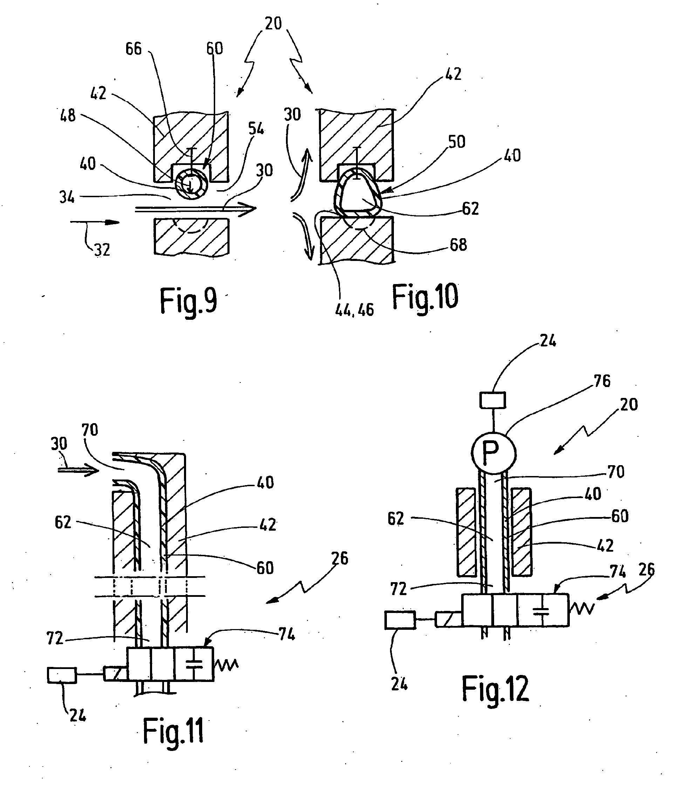

In den Fig. 9 und 10 ist eine weitere Ausführungsform einer Kühlergrillanordnung gezeigt. Die Kühlergrillanordnung 20 der Fig. 9 und 10 weist wie die Kühlergrillanordnung 20 der Fig. 7 und 8 ein Schlauchelement 60 auf, dessen Hohlraumvolumen veränderbar ist.

Bei der Kühlergrillanordnung 20 der Fig. 9 und 10 bildet das Schlauchelement 60 wiederum ein erstes Grillelement 40, das an einer quer verlaufenden Platte festgelegt ist, die ein zweites Grillelement 42 bildet. Das zweite Grillelement 42 weist dabei eine zweite Öffnung 54 auf, die mittels des Schlauchelementes 60 verschließbar ist. Das Schlauchelement 60 ist mittels einer Befestigungseinrichtung 66 an dem zweiten Grillelement 42 befestigt, und zwar derart, dass eine Änderung des Volumens des Hohlraumes 62 zu einer Ausdehnung des Schlauchelementes 60 im Wesentlichen in der Ebene des zweiten Grillelementes 42 führt, d.h. quer zu der Strömungsrichtung 32. In Fig. 9 ist dabei ein Volumen des Hohlraumes 62 eingerichtet, das einen Luftstrom 30 durch die zweite Öffnung 54 hindurch ermöglicht (geöffneter Zustand). In Fig. 10 ist der Schließzustand gezeigt, bei dem das Volumen des Hohlraumes 62 sich soweit erweitert hat, dass das Schlauchelement an einer gegenüberliegenden Seite der zweiten Öffnung 54 anliegt. Dabei kann in der gegenüberliegenden Seite der zweiten Öffnung 54 eine Vertiefung 68 ausgebildet sein, um für eine verbesserte Abdichtung zu sorgen.

In den Fig. 11 und 12 sind in schematischer Form Mittel 26 gezeigt, um ein Schlauchelement 60, wie es in den Fig. 7 bis 10 verwendet wird, hinsichtlich des Hohlraumvolumens zu verstellen.

Das Schlauchelement 60 weist dabei generell einen ersten Anschluss 70 und einen zweiten Anschluss 72 auf. Bei der Ausführungsform der Fig. 11 ist der erste Anschluss 70 unmittelbar dem Luftstrom 30 ausgesetzt, der beispielsweise mit steigender Fahrgeschwindigkeit hinsichtlich des zugeführten Druckes ansteigt. Der zweite Anschluss 72 ist entweder ständig geschlossen oder, wie gezeigt, mit einem Ventil 74 verbunden. Das Ventil 74 kann im einfachsten Fall ein Wegeventil wie ein 2/2-Wegeventil sein kann. Das Wegeventil 74 kann dabei federvorgespannt sein, wie dargestellt, und kann elektromagnetisch betätigbar sein, beispielsweise mittels der Steuereinheit 24.

In der dargestellten Stellung des Ventils 74 wird auf der Seite des zweiten Anschlusses 72 einströmende Luft nach außen abgeleitet, so dass das Schlauchelement 60 ausgehend von seinem Grundzustand im Wesentlichen keine Volumenänderung erfährt. Wenn das Ventil 74 betätigt wird, um den zweiten Anschluss 72 zu schließen, verändert sich das Volumen des Hohlraumes 62 durch den einströmenden Luftstrom 30, beispielsweise um den Schließzustand der Fig. 8 oder 10 einzurichten.

In Fig. 12 ist eine Variante zur Verstellung des Hohlraumvolumens gezeigt, bei der der erste Anschluss 70 mit einer Pumpe 76 verbunden ist, die beispielsweise genauso wie das Ventil 74 mit der Steuereinheit 24 gekoppelt und hiervon angesteuert sein kann.

Die Pumpe 76 kann dazu ausgelegt sein, das Hohlraumvolumen zu vergrößern, indem Fluid unter Druck in das Schlauchelement 60 gepumpt wird. Alternativ oder zusätzlich hierzu kann die Pumpe 76 auch dazu ausgelegt sein, an das Hohlraumvolumen ein Vakuum anzulegen, derart, dass das Hohlraumvolumen verkleinert, insbesondere minimiert wird.

Die Option zur Vergrößerung des Hohlraumvolumens oder zur Verkleinerung des Hohlraumvolumens (jeweils bezogen auf den elastisch nicht deformierten Zustand des Schlauchelementes) kann auch durch beliebige andere Mittel eingerichtet werden.

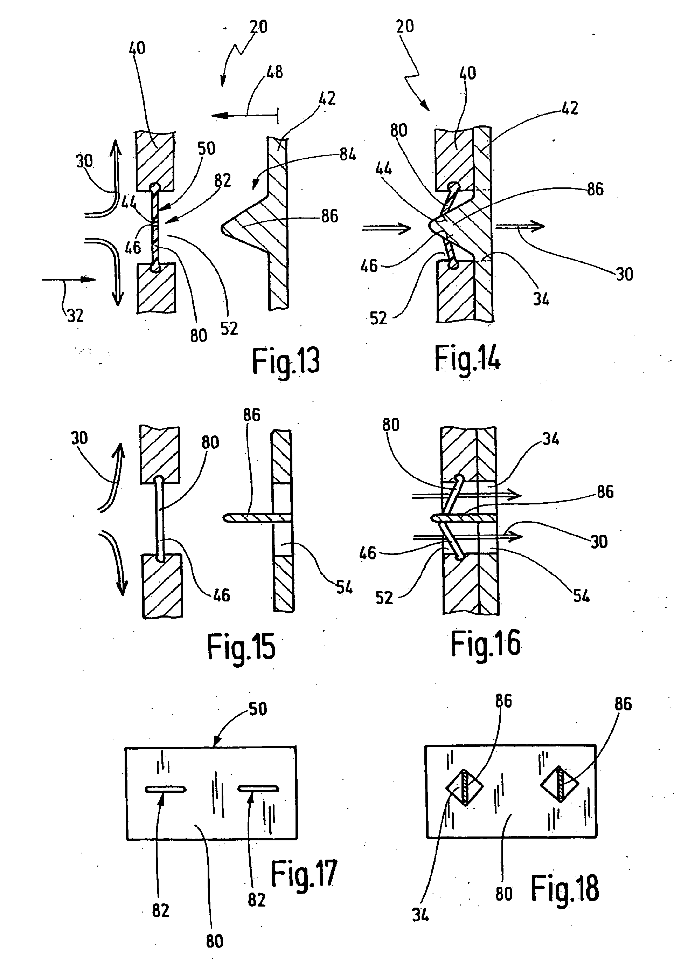

In den Fig. 13 bis 18 ist eine weitere Ausführungsform einer Kühlergrillanordnung 20 gezeigt.

Die Kühlergrillanordnung 20 weist ein erstes Grillelement 40 auf, das eine quer verlaufende Platte und eine daran festgelegte Lage 80 aus einem elastisch verformbaren Material aufweist. Die Platte des ersten Grillelementes 40 ist mit einer ersten Öffnung 52 versehen, die von der elastischen Lage 80 verschlossen ist. Die elastische Lage 80 kann beispielsweise als elastisch verformbare Platte oder Folie ausgebildet sein. In die elastische Lage 80 ist ein Schlitz 82 eingebracht, dessen einander gegenüberliegende Kanten die Schließkante 44 und die Gegenkante 46 bilden. Im normalen, d.h. elastisch nicht deformierten Zustand ist der Schlitz 82 geschlossen, wie es in Fig. 13, 15 und 17 dargestellt ist. Demzufolge ist auch die erste Öffnung 52 geschlossen, so dass ein Luftstrom 30 außen an der Kühlergrillanordnung 20 abgelenkt wird.

Die Kühlergrillanordnung weist ferner ein zweites Grillelement 42 auf, das relativ zu dem ersten Grillelement 40 bewegbar ist, und zwar in translatorischer Richtung parallel zur Strömungsrichtung 32, wie es bei 48 gezeigt ist. An dem zweiten Grillelement 42, das ebenfalls als quer verlaufende Platte mit einer zweiten Öffnung 54 (siehe Fig. 15 und 16) ausgebildet ist, sind Spreizmittel 84 zum Aufspreizen des Schlitzes 82 vorgesehen. Die Spreizmittel 84 weisen ein konisches Spreizelement 86 auf, das an dem zweiten Grillelement 42 auf der dem ersten Grillelement 40 zuweisenden Seite ausgebildet ist. Das Spreizelement 86 ist dabei hinter dem Schlitz 82 angeordnet. Sofern das zweite Grillelement 42 auf das erste Grillelement 40 zu bewegt wird, dringt das Spreizelement 86 in den Schlitz 82 ein und spreizt diesen auf, wie es in den Fig. 14, 16, 18 gezeigt ist. Demzufolge wird, wie es insbesondere in Fig. 16 gezeigt ist, der Luftkanal 34 eingerichtet, der durch die erste Öffnung 52 und die zweite Öffnung 54 gebildet ist und durch den hindurch ein Luftstrom 30 strömen kann.

Die zweite Öffnung 54 kann dabei in Strömungsrichtung mit der ersten Öffnung 52 ausgerichtet und um das Spreizelement 86 herum ausgebildet sein.

In der Öffnungsposition kann das Spreizelement 86 auch so angeordnet sein, dass es unmittelbar mit seiner vordern Spitze hinter dem Schlitz 82 liegt. Hierdurch kann die elastische Lage 80 im Bereich des Schlitzes 82 gegenüber anströmendem Fahrtwind abgestützt werden, so dass ein unbeabsichtigtes Öffnen des Schlitzes 82 zumindest weitgehend vermieden werden kann.

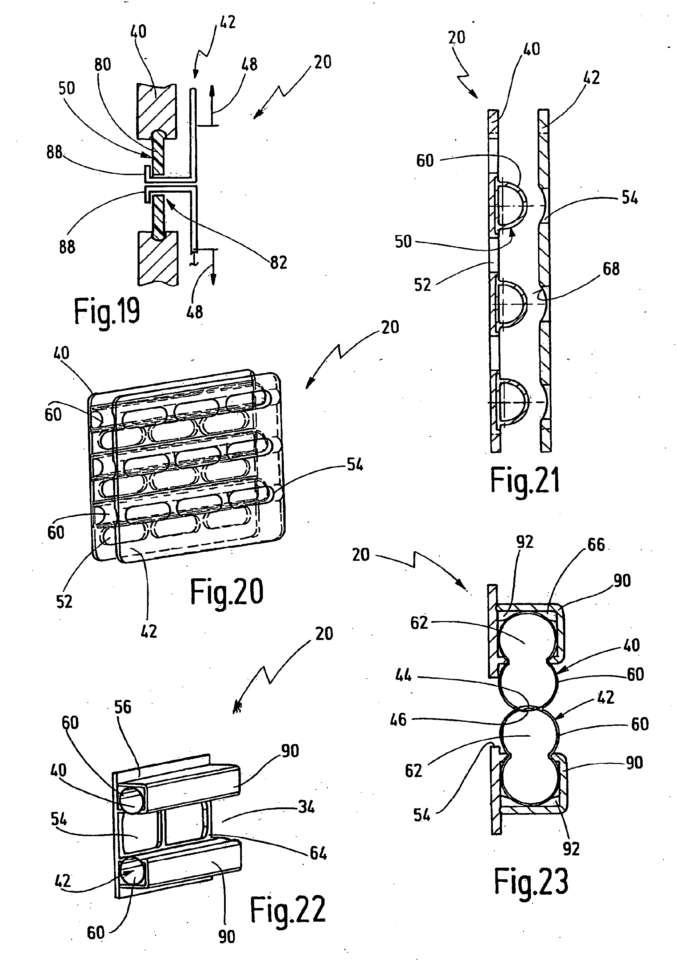

In Fig. 19 ist eine weitere Kühlergrillanordnung 20 gezeigt, deren grundsätzlicher Aufbau jenem der Kühlergrillanordnung 20 der Fig. 13 bis 18 entspricht. Dabei sind anstelle des Spreizelementes 86 Spreizmittel 84 vorgesehen, die wenigstens ein, in der dargestellten Ausführungsform zwei Hakenelemente 88 aufweisen. Die Hakenelemente 88 bilden Teil eines zweiten Grillelementes 42 und hintergreifen den Schlitz 88. Die Hakenelemente 88 sind in einer Richtung parallel zur Erstreckung der elastischen Lage 80 versetzbar gelagert. In Fig. 19 ist die Kühlergrillanordnung 20 in einem geschlossenen Zustand gezeigt, bei dem der Schlitz 82 geschlossen ist. Sofern die Hakenelemente 88 gegeneinander bewegt werden, wie es in Fig. 19 bei 48 gezeigt ist, spreizen die Hakenelemente 88 den Schlitz 82 auf, indem sie diesen aufziehen.

In den Fig. 20 und 21 ist eine Kühlergrillanordnung 20 gezeigt, die hinsichtlich Aufbau und Funktionsweise generell den Kühlergrillanordnungen der Fig. 6 bis 8 entspricht. Wie dargestellt, weisen die erste Platte 40 und die zweite Platte 42 eine Mehrzahl von in Strömungsrichtung gegeneinander versetzt angeordneten Öffnungen 52 bzw. 54 auf, wobei eine Reihe von Öffnungen 54 nebeneinander angeordnet sind, und zwar parallel zur Erstreckung des Schlauchelementes 60. Demzufolge kann jeweils ein Schlauchelement eine Mehrzahl von zweiten Öffnungen 54 verschließen, sofern die Platten 40, 42 gegeneinander bewegt werden (oder das Schlauchelement 60 sein Volumen ändert).

In Fig. 21 ist ferner gezeigt, dass die zweite Platte 42 im Bereich der zweiten Öffnungen 54 im Querschnitt eine hohlkehlenförmige Vertiefung 68 ausgebildet, so dass das Schlauchelement im Schließzustand in diese Vertiefung dringen kann. Hierdurch kann die Dichtigkeit im Schließzustand erhöht werden. Ferner kann das Schlauchelement 60 gegenüber scharfkantigen Kontakten mit dem zweiten Grillelement 42 geschützt werden.

In den Fig. 22 und 23 ist eine weitere Ausführungsform einer Kühlergrillanordnung 20 gezeigt, die hinsichtlich ihres Aufbaus und hinsichtlich ihrer Funktionsweise der Kühlergrillanordnung 20 der Fig. 9 und 10 entspricht. Hierbei weist die Kühlergrillanordnung 20 jedoch eine Trägerplatte auf, an der ein erstes Schlauchelement 60, das das erste Grillelement 40 bildet, und ein zweites Schlauchelement 60, das das zweite Grillelement 42 bildet, vorgesehen sind. Die Schlauchelemente 60 sind dabei auf gegenüberliegenden Seiten einer Öffnung 54 in dem Trägerelement 56 angeordnet und sind jeweils dazu ausgelegt, hinsichtlich ihres Volumens verändert zu werden. In Fig. 22 ist die Kühlergrillanordnung in einem geöffneten Zustand gezeigt. In Fig. 23 ist der Schließzustand gezeigt, bei dem die Schlauchelemente 60 jeweils ein vergrößertes Volumen aufweisen, so dass sie sich quer über die Öffnung 54 erstrecken und einander berühren (so dass das eine Schlauchelement 60 eine Schließkante 44 und das andere Schlauchelement 60 eine Gegenkante 46 bildet, wie es in Fig. 23 dargestellt ist.

Die Schlauchelemente sind dabei an dem Trägerelement 56 jeweils über Halteprofile 90 gelagert, die bei Minimalvolumen des Schlauchelementes 60 dieses weitgehend vollständig umgeben, wie es in Fig. 22 gezeigt ist. Dabei sind die Schlauchelemente 60 in den Halteprofilen 90 durch Befestigungseinrichtungen 66 befestigt, die beispielsweise durch eine Klebstoff 92 gebildet sein können, wie es in Fig. 23 dargestellt ist.

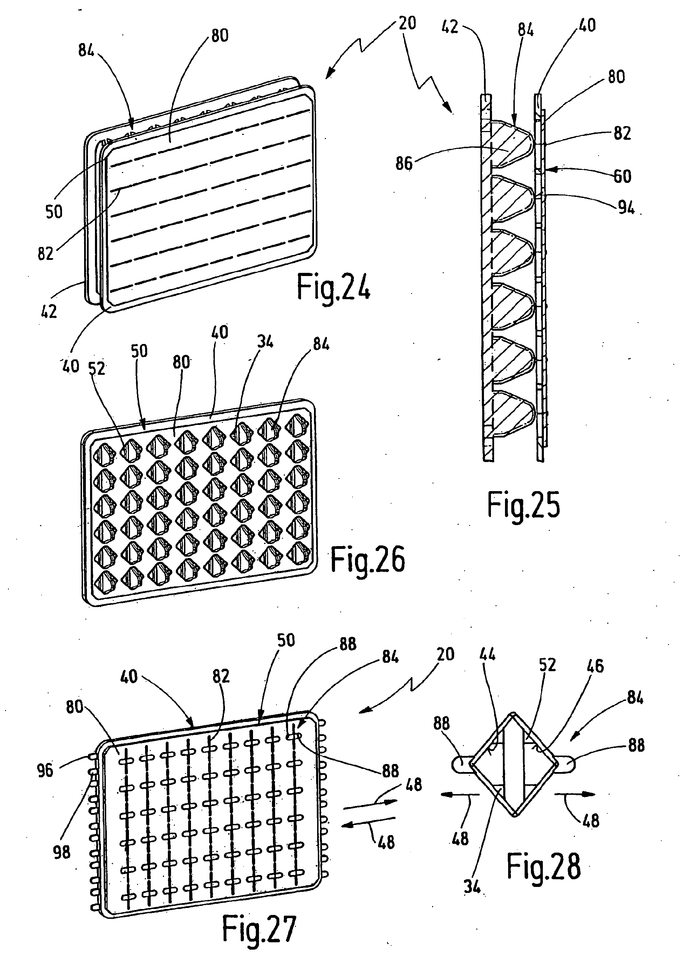

In den Fig. 24 bis 26 ist eine weitere Ausführungsform einer Kühlergrillanordnung 20 gezeigt, die hinsichtlich Aufbau und Funktionsweise generell der Kühlergrillanordnung 20 der Fig. 13 bis 18 entspricht.

Dabei ist zunächst zu sehen, dass die elastische Lage 80 eine Mehrzahl von Schlitzen 82 aufweist, und in entsprechender Weise das zweite Grillelement 42 eine Mehrzahl von konischen Spreizelementen 86, die jeweils einem Schlitz 82 zugeordnet sind. In Fig. 25 ist ferner zu erkennen, dass die konischen Spreizelemente 86 an ihrer Spitze 94 abgeflacht sind, um den Schlitz 82 im geöffneten Zustand besser von hinten abstützen zu können.

In den Fig. 27 und 28 ist eine weitere Ausführungsform einer Kühlergrillanordnung 20 gezeigt, die hinsichtlich der Funktionsweise der Kühlergrillanordnung 20 der Fig. 19 entspricht.

An der Platte 40, an der die elastische Lage 80 mit der Mehrzahl von Schlitzen 82 festgelegt ist, ist eine Mehrzahl von ersten Leisten 96 und von zweiten Leisten 98 verschiebbar gelagert, und zwar in entgegengesetzte Richtungen 48, wie es in Fig. 27 und 28 gezeigt ist. Den ersten Leisten 88 sind dabei jeweilige erste Hakenelemente 88 zugeordnet, die die Schlitze 82 jeweils von einer Seite hintergreifen. Den zweiten Leisten 98 sind jeweils zweite Hakenelemente 88 zugeordnet, die die Schlitze von jeweils der anderen Seite hintergreifen. In Fig. 28 ist dabei ein geöffneter Zustand gezeigt, bei dem die Hakenelemente 88 den Schlitz aufgespreizt haben, so dass ein Luftkanal 34 eingerichtet wird.

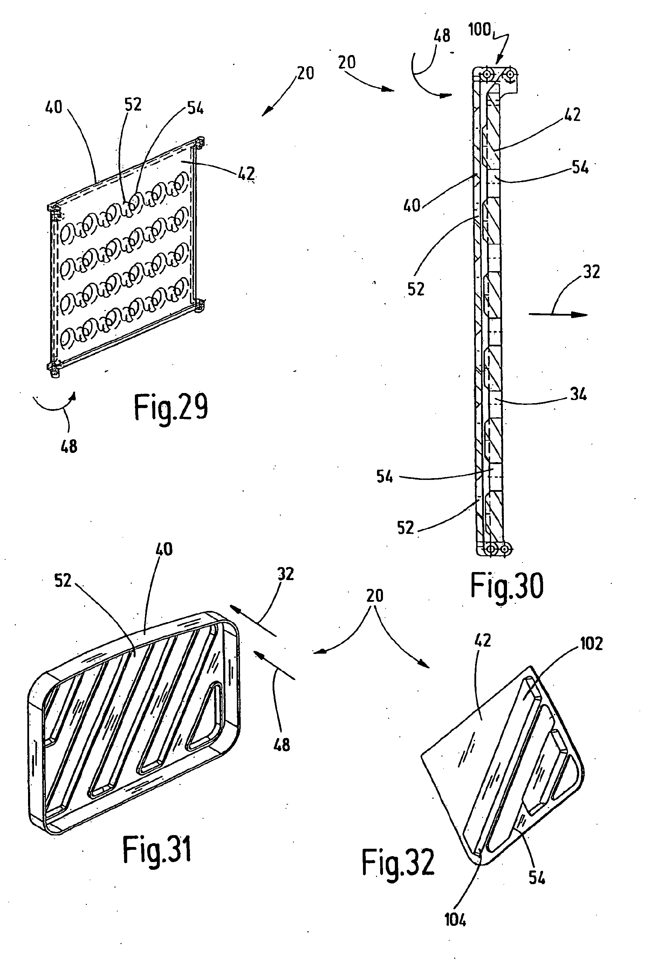

In den Fig. 29 und 30 ist eine weitere Kühlergrillanordnung 20 gezeigt, deren Aufbau und Funktionsweise generell der Kühlergrillanordnung 20 der Fig. 5 entspricht. Dabei sind die erste Platte 40 und die zweite Platte 42 über einen Schwenkmechanismus 100 miteinander gekoppelt, so dass die Relativbewegung 48 durch eine Überlagerung einer Längsbewegung parallel zur Strömungsrichtung 32 und einer Querbewegung hierzu eingerichtet ist.

In den Fig. 31 und 32 ist eine weitere Kühlergrillanordnung 20 gezeigt, die eine erste Platte 40 und eine zweite Platte 42 aufweist. An der ersten Platte 40 sind erste Öffnungen 52 vorgesehen, die beispielsweise sich konisch aufweitende Aufnahmen aufweisen, und zwar auf der der zweiten Platte 42 zugewandten Seite. Die zweite Platte 42 weist zwischen den zweiten Öffnungen 54 Vorsprünge 102 auf, die an den Ränderm abgeschrägte Flächen 104 aufweisen, die in die konischen Aufnahmen der ersten Öffnungen 52 passen.

Die Relativbewegung zwischen den zwei Platten 40, 42 kann parallel zur Strömungsrichtung 32 erfolgen, wie es in Fig. 31 gezeigt ist.

Bei der Ausbildung der Kühlergrillanordnung mit einer ersten Platte 40 und einer zweiten Platte 42, wie in den Fig. 5 sowie 29 bis 32 gezeigt, ist es nicht unbedingt erforderlich, dass die erste Platte 40 oder die zweite Platte 42 ein elastisch verformbares Schließelement 50 aufweist. Vielmehr können die Platten 40, 42 auch als steife Platten ausgebildet sein. Auch bei dieser Ausführungsform können Blockaden durch Schneebewurf oder Insekten, etc. vermieden werden. Dies liegt zum einen daran, dass die ersten Öffnungen 52 und die zweiten Öffnungen 54 quer zur Strömungsrichtung 32 gegeneinander versetzt angeordnet sind. Zum anderen können etwaige Blockaden durch die Relativbewegung zwischen der ersten Platte 40 und der zweiten Platte 42 vergleichsweise einfach aufgebrochen bzw. gelöst werden.

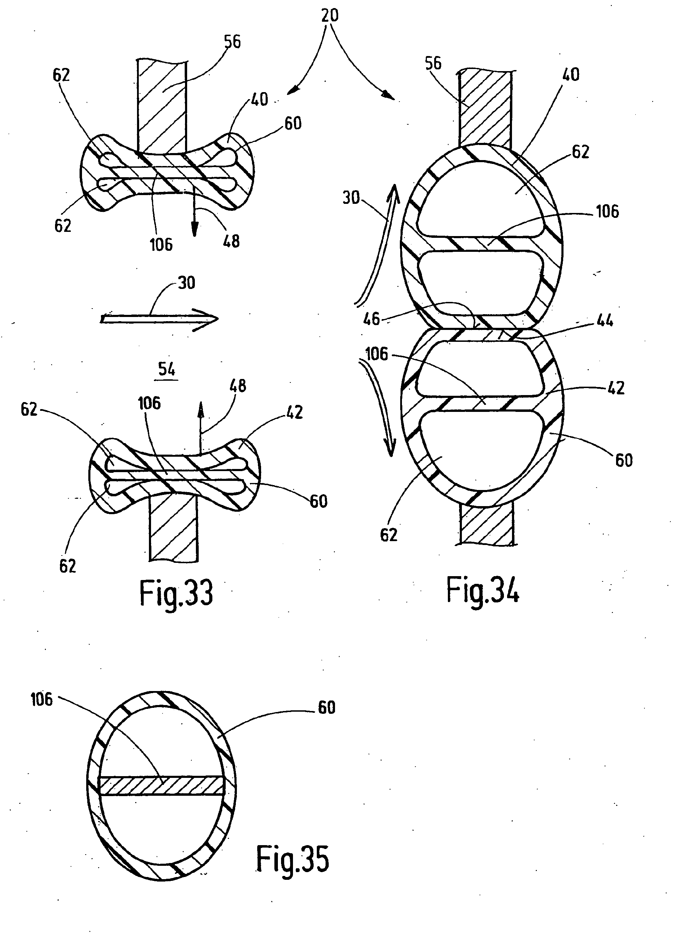

In den Fig. 33 und 34 ist eine weitere Ausführungsform einer erfindungsgemäßen Kühlergrillanordnung gezeigt, deren grundsätzlicher Aufbau jenem der Fig. 9 bis 12 bzw. 22, 23 entspricht. Im Folgenden werden lediglich die Unterschiede erläutert. Die Kühlergrillanordnung 20 der Fig. 33, 34 weist ein plattenartiges Trägerelement 56 auf, das eine Öffnung 54 beinhaltet. An einer Seite der Öffnung 54 oder, wie dargestellt, an zwei Seiten der Öffnung 54 ist jeweils ein Schlauchelement 60 festgelegt. In der dargestellten Ausführungsform entspricht das eine Schlauchelement dem ersten Grillelement 40, das andere Schlauchelement 60 dem zweiten Grillelement 42.

Die Schlauchelemente sind in der Darstellung der Fig. 33 in einer Offenstellung, so dass ein Luftstrom 30 durch die Kühlergrillanordnung 20 hindurch eingerichtet ist. Dabei ist an den jeweiligen Hohlraum 62 der Schlauchelemente 60 ein Vakuum angelegt, so dass die Schlauchelemente 60 eng zusammengefaltet sind und nur wenig Bauraum beanspruchen bzw. eine relativ große Öffnung 54 freigeben.

In der Darstellung der Fig. 34 ist die Schließstellung gezeigt. Hierbei können die Schlauchelemente 60 in einer elastisch unbeanspruchten Grundstellung sein, derart, dass die Schließkante 44 und die Gegenkante 46 aneinander anliegen. Um die Dichtung zum Schließen der Öffnung 54 zu verbessern, kann in den jeweiligen Hohlraum 62 auch ein Fluid unter Druck eingefüllt sein, so dass die Schlauchelemente 60 gegenüber ihrem elastisch entspannten Zustand ausgedehnt sind, um die Schließkante 44 und die Gegenkante 46 aneinander anzudrücken.

Die Schlauchelemente der oben beschriebenen Ausführungsformen können jeweils einen beliebigen Querschnitt haben, vorzugsweise einen etwa runden oder halbrunden Querschnitt (jeweils im elastisch entspannten Zustand).

Sofern an ein Schlauchelement 60 ein Vakuum anlegbar ist, um das Gesamtvolumen des Schlauchelementes in einer der Stellungen zu minimieren (wie in Fig. 33 gezeigt), ist es bevorzugt, wenn in das Schlauchelement 60 Faltvorbestimmungsmittel integriert sind, die dazu dienen, im kollabierten Zustand des Schlauchelementes 60 für eine gezielte Geometrie zu sorgen. Derartige Faltvorbestimmungsmittel können Kerben oder sonstige Ausnehmungen in dem Schlauchmaterial sein. Besonders bevorzugt ist es jedoch, wenn in das Schlauchelement 60 ein über die Länge durchgehender Steg 106 eingebracht ist, der dafür sorgt, dass das Schlauchelement 60 in der kollabierten (Vakuum-Stellung) eine gezielte bzw. vorbestimmte Geometrie einnimmt. Ein solcher Steg 106 kann, wie in den Fig. 33 und 34 gezeigt, einstückig mit dem Schlauchelement 60 ausgebildet sein, also beispielsweise mit dem Schlauchelement 60 gemeinsam extrudiert sein. Alternativ hierzu ist es möglich, einen solchen Steg nachträglich in das Schlauchelement 60 einzubringen, wie es in Fig. 35 gezeigt ist. In diesem Fall kann der Steg 106 aus einem anderen Material bestehen als das Schlauchelement 60, beispielsweise aus einem relativ steifen thermoplastischen oder duroplastischen Kunststoffmaterial, aus einem Metall oder ähnliches.

Zum Einrichten des Vakuums ist es beispielsweise möglich, die in Fig. 12 gezeigte Pumpe 76 zu verwenden (ggf. mit Drehrichtungsumkehr). Alternativ ist es auch möglich, den hierzu notwendigen Unterdruck von anderen Quellen innerhalb des Fahrzeugs abzuleiten.

## Patentansprüche

1. Verstellbare Kühlergrillanordnung (20) für ein Kraftfahrzeug (10), die wenigstens einen Luftkanal (34) aufweist, durch den hindurch ein Luftstrom (30) zum Anströmen eines Kühlers (14) geführt werden kann, mit einem ersten Grillelement (40) und einem zweiten Grillelement (42), die relativ zueinander bewegbar sind, um den Luftkanal (34) zu öffnen oder zu schließen, wobei das erste Grillelement (40) eine Schließkante (44) aufweist, die bei geöffnetem Luftkanal (34) von einer Gegenkante (46) entfernt angeordnet ist und bei geschlossenem Luftkanal (34) benachbart zu der Gegenkante angeordnet ist, wobei das erste Grillelement (40) ein elastisch verformbares Schließelement (50) aufweist, das die Schließkante (44) bildet, wobei das Schließelement (50) ein Schlauchelement (60) aus einem elastisch verformbaren Material aufweist, das einen Hohlraum (62) umschließt und dazu ausgelegt ist, sein Volumen zumindest zwischen einem Offenvolumen zum Öffnen des Luftkanals (34) und einem Schließvolumen zum Schließen des Luftkanals (34) zu verändern,
**dadurch gekennzeichnet, dass**
das Schlauchelement (60) so ausgebildet ist, dass die Schließkante (44) und die Gegenkante (46) in einer elastisch unbeanspruchten Grundstellung aneinander anliegen.

2. Verstellbare Kühlergrillanordnung nach Anspruch 1, **dadurch gekennzeichnet, dass** in dem Schlauchelement (60) ein Steg (106) angeordnet ist, der sich in Längsrichtung des Schlauchelementes (60) erstreckt.

3. Verstellbare Kühlergrillanordnung nach Anspruch 1 oder 2, **dadurch gekennzeichnet, dass** das Schlauchelement (60) das erste Grillelement (40) bildet und die Relativbewegung zu dem zweiten Grillelement (42) durch eine Volumenänderung des Schlauchelementes (60) eingerichtet ist.

4. Verstellbare Kühlergrillanordnung nach Anspruch 3, **dadurch gekennzeichnet, dass** das Schlauchelement an dem zweiten Grillelement (42) oder einem Trägerelement (56) festgelegt ist und dazu ausgelegt ist, eine Öffnung (54) in dem zweiten Grillelement (42) bzw. dem Trägerelement (56) zu verschließen, wenn das Schließvolumen eingerichtet ist.

5. Verstellbare Kühlergrillanordnung nach Anspruch 4, **dadurch gekennzeichnet, dass** das Schlauchelement (60) an einem Trägerelement (64) festgelegt ist, das benachbart zu dem zweiten Grillelement (42) angeordnet ist, und dazu ausgelegt ist, eine Öffnung (54) in dem zweiten Grillelement (42) zu verschließen, wenn das Schließvolumen eingerichtet ist.

6. Verstellbare Kühlergrillanordnung nach einem der Ansprüche 1 - 5, **dadurch gekennzeichnet, dass** das Schließelement (50) an einem der Grillelemente (40, 42) festgelegt ist und dazu ausgelegt ist, eine Öffnung (52, 54) in dem anderen Grillelement (40, 42) zu verschließen, wenn die Grillelemente (40, 42) relativ zueinander in eine Schließposition bewegt sind.

7. Verstellbare Kühlergrillanordnung nach einem der Ansprüche 1 - 6, **dadurch gekennzeichnet, dass** das Offenvolumen dadurch eingerichtet wird, dass der Hohlraum des Schlauchelementes durch Anlegen eines Vakuums verkleinert wird.

8. Verstellbare Kühlergrillanordnung nach einem der Ansprüche 2 - 7, **dadurch gekennzeichnet, dass** der Steg (106) einstückig mit dem Schlauchelement (60) ausgebildet ist.

9. Verstellbare Kühlergrillanordnung nach einem der Ansprüche 1 - 8, **dadurch gekennzeichnet, dass** das erste und das zweite Grillelement (40, 42) jeweils durch eine Schlauchelement (60) gebildet sind, wobei die Schlauchelemente (60) an einem Trägerelement (56) festgelegt sind.

10. Verstellbare Kühlergrillanordnung nach Anspruch 9, **dadurch gekennzeichnet, dass** wenigstens eines der Schlauchelemente (60) bei geöffnetem Luftkanal (34) mit einem Unterdruck beaufschlagt ist.

11. Verstellbare Kühlergrillanordnung nach einem der Ansprüche 1 - 10, mit einer ersten Platte (40), die das erste Grilleelement (40) bildet, und mit einer zweiten Platte (42), die das zweite Grillelement (42) bildet, wobei die Platten (40, 42) jeweils quer zur Strömungsrichtung (32) des Luftstromes (30) angeordnet sind und in Strömungsrichtung (32) hintereinander angeordnet sind, wobei die erste Platte (40) wenigstens eine erste Öffnung (52) aufweist und die zweite Platte(42) wenigstens eine zweite Öffnung (54) aufweist, wobei der Luftstrom (30) durch die Öffnungen (52, 54) hindurch führbar ist, und mit Mitteln (26) zum Einstellen des für den Luftstrom (30) bereitgestellten Strömungsquerschnittes.

12. Verstellbare Kühlergrillanordnung nach Anspruch 11, **dadurch gekennzeichnet, dass** die Einstellmittel (26) dazu ausgebildet sind, wenigstens eine der Platten (40, 42) relativ zu der anderen (40, 42) zu bewegen, derart, dass wenigstens eine der ersten und der zweiten Öffnung (52, 54) in einer ersten Relativstellung geöffnet und in einer zweiten Relativstellung zumindest teilweise geschlossen ist.

13. Verstellbare Kühlergrillanordnung nach Anspruch 12, **dadurch gekennzeichnet, dass** die Einstellmittel (26) dazu ausgebildet sind, die Platte (40, 42) in einer Richtung (48) parallel zur Strömungsrichtung (32) zu bewegen.

14. Verstellbare Kühlergrillanordnung nach Anspruch 12 oder 13, **dadurch gekennzeichnet, dass** die Einstellmittel (26) dazu ausgebildet sind, die Platte (40, 42) in einer Richtung (48) quer zur Strömungsrichtung (32) zu bewegen.

15. Verstellbare Kühlergrillanordnung nach einem der Ansprüche 1 - 14, **dadurch gekennzeichnet, dass** das Schließelement (50) eine Lage (80) aus einem elastisch verformbaren Material aufweist, die wenigstens einen elastisch aufweitbaren Schlitz (82) aufweist, dessen Kanten die Schließkante (44) und die Gegenkante (46) bilden, die im benachbarten Zustand den Luftkanal (34) schließen.

## Claims

1. An adjustable radiator grille arrangement (20) for a motor vehicle (10), comprising at least one air channel (34), through which an air flow (30) for the incident flow of a radiator (14) can be guided, having a first grille element (40) and a second grille element (42), which are moveable relative to one another, in order to open or to close the air channel (34), wherein the first grille element (40) comprises a closing edge (44), which is disposed at a distance from a counteredge (46) when the air channel (34) is opened and adjacent to the counteredge when the air channel (34) is closed, wherein the first grille element (40) comprises an elastically deformable closing element (50), which forms the closing edge (44), wherein the closing element (50) comprises a tubular element (60) composed of an elastically deformable material, which encloses a cavity (62), and designed to vary its volume at least between an open volume for opening of the air channel (34) and a closed volume for closing of the air channel (34),
**characterized in that**
the tubular element (60) is formed such that, in an elastically non-loaded basic position, the closing edge (44) and the counteredge (46) contact each other.

2. The adjustable radiator grille arrangement as claimed in claim 1, **characterized in that** a web (106), which extends in the longitudinal direction of the tubular element (60), is arranged in the tubular element (60).

3. The adjustable radiator grille arrangement as claimed in claim 1 or 2, **characterized in that** the tubular element (60) forms the first grille element (40) and the movement relative to the second grille element (42) is established by a variation in the volume of the tubular element (60).

4. The adjustable radiator grille arrangement as claimed in claim 3, **characterized in that** the tubular element is fixed to the second grille element (42) or to a carrier element (56) and is designed to close an aperture (54) in the second grille element (42) or the carrier element (56), when the closed volume is established.

5. The adjustable radiator grille arrangement as claimed in claim 4, **characterized in that** the tubular element (60) is fixed to a carrier element (64), which is located adjacently to the second grille element (42), and is designed to close an aperture (54) in the second grille element (42), when the closed volume is established.

6. The adjustable radiator grille arrangement as claimed in one of claims 1 - 5, **characterized in that** the closing element (50) is fixed to one of the grille elements (40, 42) and is designed to close an aperture (52, 54) in the other grille element (40, 42), when the grille elements (40, 42) are moved into a closing position relative to one another.

7. The adjustable radiator grille arrangement as claimed in one of claims 1 - 6, **characterized in that** the open volume is established by reducing the cavity of the tubular element through the application of a vacuum.

8. The adjustable radiator grille arrangement as claimed in one of claims 2 - 7, **characterized in that** the web (106) is integrally formed with the tubular element (60).

9. The adjustable radiator grille arrangement as claimed in one of claims 1 - 8, **characterized in that** the first grille element (40) and the second grille element (42) are each formed by a tubular element (60), the tubular elements (60) being fixed to a carrier element (56).

10. The adjustable radiator grille arrangement as claimed in claim 9, **characterized in that** at least one of the tubular elements (60) is subjected to a vacuum when the air channel (34) is opened.

11. The adjustable radiator grille arrangement as claimed in one of claims 1 - 10, having a first plate (40), which forms the first grille element (40), and a second plate (42), which forms the second grille element (42), wherein the plates (40, 42) are each arranged transversely to the direction of flow (32) of the air flow (30) and in series in the direction of flow (32), wherein the first plate (40) comprises at least one first aperture (52) and the second plate (42) comprises at least one second aperture (54), wherein the air flow (30) can be led through the apertures (52, 54), and having means (26) for adjusting the flow cross section provided for the air flow (30).

12. The adjustable radiator grille arrangement as claimed in claim 11, **characterized in that** adjustment means (26) are designed to move at least one of the plates (40, 42) relative to the other (40, 42), in such a way that of the first and second apertures (52, 54) at least one is opened in a first relative position and is at least partially closed in a second relative position.

13. The adjustable radiator grille arrangement as claimed in claim 12, **characterized in that** the adjustment means (26) are designed to move the plate (40, 42) in a direction (48) parallel to the direction of flow (32).

14. The adjustable radiator grille arrangement as claimed in claim 12 or 13, **characterized in that** the adjustment means (26) are designed to move the plate (40, 42) in a transverse direction (48) to the direction of flow (32).

15. The adjustable radiator grille arrangement as claimed in one of claims 1 - 14, **characterized in that** the closing element (50) comprises a layer (80) composed of an elastically deformable material, which comprises at least one elastically expansible slit (82), the edges of which form the closing edge (44) and the counteredge (46), which in the adjacent state close the air channel (34).

## Revendications

1. Ensemble de grille de radiateur réglable (20) pour un véhicule automobile (10), comprenant au moins un conduit d'air (34) à travers lequel peut être guidé un flux d'air (30) affluant vers un radiateur (14), comprenant un premier élément de grille (40) et un douzième élément de grille (42) qui peuvent être déplacés l'un par rapport à l'autre pour ouvrir ou fermer le conduit d'air (34), le premier élément de grille (40) présentant une arête de fermeture (44) qui, lorsque le conduit d'air (34) est ouvert, est disposée à distance d'une arête conjuguée (46) et lorsque le conduit d'air (34) est fermé, est disposée en position adjacente à l'arête conjuguée, le premier élément de grille (40) présentant un élément de fermeture déformable élastiquement (50) qui forme l'arête de fermeture (44), l'élément de fermeture (50) présentant un élément de tuyau flexible (60) en un matériau déformable élastiquement, qui entoure une cavité (62) et est conçu pour modifier son volume au moins entre un volume d'ouverture pour l'ouverture du conduit d'air (34) et un volume de fermeture pour fermer le conduit d'air (34),
**caractérisé en ce que**
l'élément de tuyau flexible (60) est réalisé de telle sorte que l'arête de fermeture (44) et l'arête conjuguée (46) s'appliquent l'une contre l'autre dans une position de base non sollicitée élastiquement.

2. Ensemble de grille de radiateur réglable selon la revendication 1, **caractérisé en ce qu'**une nervure (106) est disposée dans l'élément de tuyau flexible (60), laquelle s'étend dans la direction longitudinale de l'élément de tuyau flexible (60).

3. Ensemble de grille de radiateur réglable selon la revendication 1 ou 2, **caractérisé en ce que** l'élément de tuyau flexible (60) forme le premier élément de grille (40) et le mouvement relatif par rapport au deuxième élément de grille (42) est effectué par le biais d'une variation de volume de l'élément de tuyau flexible (60).

4. Ensemble de grille de radiateur réglable selon la revendication 3, **caractérisé en ce que** l'élément de tuyau flexible est fixé sur le deuxième élément de grille (42) ou un élément de support (56) et est conçu de manière à fermer une ouverture (54) dans le deuxième élément de grille (42) ou dans l'élément de support (56) lorsque le volume de fermeture est réalisé.

5. Ensemble de grille de radiateur réglable selon la revendication 4, **caractérisé en ce que** l'élément de tuyau flexible (60) est fixé sur un élément de support (64) qui est disposé de manière adjacente au deuxième élément de grille (42), et est conçu de manière à fermer une ouverture (54) dans le deuxième élément de grille (42) lorsque le volume de fermeture est réalisé.

6. Ensemble de grille de radiateur réglable selon l'une quelconque des revendications 1 à 5, **caractérisé en ce que** l'élément de fermeture (50) est fixé sur l'un des éléments de grille (40, 42) et est conçu de manière à fermer une ouverture (52, 54) dans l'autre élément de grille (40, 42) lorsque les éléments de grille (40, 42) sont déplacés l'un par rapport à l'autre dans une position de fermeture.

7. Ensemble de grille de radiateur réglable selon l'une quelconque des revendications 1 à 6, **caractérisé en ce que** le volume d'ouverture est réalisé de telle sorte que la cavité de l'élément de tuyau flexible soit réduite par l'application d'un vide.

8. Ensemble de grille de radiateur réglable selon l'une quelconque des revendications 2 à 7, **caractérisé en ce que** la nervure (106) est réalisée d'une seule pièce avec l'élément de tuyau flexible (60).

9. Ensemble de grille de radiateur réglable sélon l'une quelconque des revendications 1 à 8, **caractérisé en ce que** le premier et le deuxième élément de grille (40, 42) sont formés chacun par un élément de tuyau flexible (60), les éléments de tuyau flexible (60) étant fixés sur un élément de support (56).

10. Ensemble de grille de radiateur réglable selon la revendication 9, **caractérisé en ce qu'**au moins l'un des éléments de tuyau flexible (60) est sollicité avec une dépression lorsque le conduit d'air (34) est ouvert.

11. Ensemble de grille de radiateur réglable selon l'une quelconque des revendications 1 à 10, comprenant une premiere plaque (40) qui forme le premier élément de grille (40), et une deuxième plaque (42) qui forme le deuxième élément de grille (42), les plaques (40, 42) étant disposées à chaque fois transversalement à la direction d'écoulement (32) du flux d'air (30) et étant disposées l'une derrière l'autre dans la direction d'écoulement (32), la première plaque (40) présentant au moins une première ouverture (52) et la deuxième plaque (42) présentant au moins une deuxième ouverture (54), le flux d'air (30) pouvant être guidé à travers les ouvertures (52, 54), et comprenant des moyens (26) pour l'ajustement de la section transversale d'écoulement fournie pour le flux d'air (30).

12. Ensemble de grille de radiateur réglable selon la revendication 11, **caractérisé en ce que** les moyens d'ajustement (26) sont réalisés de manière à déplacer au moins l'une des plaques (40, 42) par rapport à l'autre (40, 42), de telle sorte qu'au moins l'une des première et deuxième ouvertures (52, 54) soit ouverte dans une première position relative et soit au moins partiellement fermée dans une deuxième position relative.

13. Ensemble de grille de radiateur réglable selon la revendication 12, **caractérisé en ce que** les moyens d'ajustement (26) sont réalisés de manière à déplacer la plaque (40, 42) dans une direction (48) parallèle à la direction d'écoulement (32).

14. Ensemble de grille de radiateur réglable selon la revendication 12 ou 13, **caractérisé en ce que** les moyens d'ajustement (26) sont réalisés de manière à déplacer la plaque (40, 42) dans une direction (48) transversale à la direction d'écoulement (32).

15. Ensemble de grille de radiateur réglable selon l'une quelconque des revendications 1 à 14, **caractérisé en ce que** l'élément de fermeture (50) présente une couche (80) de matériau déformable élastiquement, qui présente au moins une fente (82) pouvant être élargie élastiquement, dont les arêtes forment l'arête de fermeture (44) et l'arête conjuguée (46) qui ferment le conduit d'air (34) dans l'état en position adjacente.
